# EUROPÄISCHE PATENTSCHRIFT

(11) **EP 1 871 174 B1**
(45) Veröffentlichungstag und Bekanntmachung des Hinweises auf die Patenterteilung: **10.08.2016**
(21) Anmeldenummer: 06701588.3
(22) Anmeldetag: 06.02.2006
(51) Int. Cl.: A23G 1/20, A23G 9/28, A23G 1/00, A23G 7/00

(54) **VORRICHTUNG ZUR VERARBEITUNG EINES VERZEHRGUTES**
DEVICE FOR PROCESSING AN EDIBLE PRODUCT
DISPOSITIF DE TRAITEMENT D'UN PRODUIT ALIMENTAIRE

(30) Priorität: 20.04.2005 DE 102005018503
(43) Veröffentlichungstag der Anmeldung: 02.01.2008
(73) Patentinhaber: Bühler AG, 9240 Uzwil (CH)
(72) Erfinder: GASSER, Heinz, CH-9523 Züberwangen (CH); SCHENK, Günter, 51570 Windbeck-langenberg (DE); PAUL, Michael, 51702 Bergneustadt (DE)
(74) Vertreter: Hepp Wenger Ryffel AG
(86) Internationale Anmeldenummer: PCT/CH2006/000074
(87) Internationale Veröffentlichungsnummer: WO 2006/111033

(56) Entgegenhaltungen:
- EP-A- 0 456 263
- EP-A- 0 623 286
- WO-A-91/18518
- WO-A-2004/026037
- DE-A1- 10 143 361
- DE-A1- 10 143 392
- GB-A- 1 185 378
- US-A- 4 538 978

## Beschreibung

Die Erfindung bezieht sich auf eine Vorrichtung bzw. Giessmaschine zur Verarbeitung eines Verzehrgutes in Form einer viskosen bis pastösen Masse, insbesondere eines Verzehrgutes auf Fettmasse-Basis wie Schokolade oder eines Verzehrgutes auf Wasser-Basis wie Eiskrem. Diese Vorrichtung enthält Dosiereinheiten zum dosierten Zuführen eines bestimmten Volumens der Masse auf eine Auflagefläche, wobei die Dosiereinheiten jeweils einen in einer Kolbenkammer gelagerten Dosierkolben aufweisen, dessen Dosierbewegung mindestens eine Drehbewegung des Dosierkolbens um seine Kolbenachse enthält. Eine erste Vielzahl von Dosiereinheiten sind in einer ersten Ebene angeordnet, während eine zweite Vielzahl von Dosiereinheiten in einer zweiten Ebene angeordnet sind.

Eine derartige Anordnung ist beispielsweise in WO2004/026037 offenbart, wobei der Antrieb nicht näher gezeigt wird.

Auch GB 1,185,378 A beschreibt eine Vorrichtung zum Einbringen einer fliessfähigen Lebensmittelmasse in eine Form mit mehreren Dosierdüsen. Jede Zylinder-Kolben Anordnung wird durch ein separates Antriebsmittel bewegt.

DE 101 43 392 A1 zeigt eine weitere Lösung zum Dosieren einer fliessfähigen Lebensmittelmasse. Mehrere einreihige Kolbenanordnungen sind modulartig parallel zueinander angeordnet, wobei mehrere Kolben miteinander mechanisch gekoppelt sind.

Der Erfindung liegt die Aufgabe zugrunde, bei einer derartigen Vorrichtung bzw. Giessmaschine eine möglichst gleichmässige Einleitung von Antriebsenergie in jede Dosiereinheit zu ermöglichen.

Diese Aufgabe wird dadurch gelöst, dass die Dosierkolben der in der ersten Ebene angeordneten Dosiereinheiten über ein erstes Antriebselement drehangetrieben sind und die Dosierkolben der in der zweiten Ebene angeordneten Dosiereinheiten über ein zweites Antriebselement drehangetrieben sind. Auf diese Weise erhält jede Dosiereinheit ihre für die Drehbewegung des Dosierkolbens notwendige Antriebsenergie direkt von einem Antriebselement.

Vorzugsweise sind die Dosierkolben der Dosiereinheiten jeweils drehfest mit einem Zahnrad verbunden, dessen Drehachse kollinear mit der Drehachse des jeweiligen Drehkolbens ist, wobei das erste Antriebselement eine erste Zahnstange ist, deren Zahnung mit den Zahnrädern der in der ersten Ebene angeordneten Dosierkolben kämmt, und wobei das zweite Antriebselement eine zweite Zahnstange ist, deren Zahnung mit den Zahnrädern der in der zweiten Ebene angeordneten Dosierkolben kämmt.

Diese beiden Zahnstangen ermöglichen einen Betrieb, bei dem die beiden Zahnstangen jeweils entgegengesetzt bewegt werden. Diese Betriebsart ermöglicht, dass die durch die Zahnstangenbewegungen hervorgerufenen Reaktionskräfte und Reaktionsdrehmomente sich weitgehend aufheben. Dies trägt zu einem ruhigen, vibrationsarmen Betrieb der Giessmaschine bei. Für diese Bauart und Betriebsart ist es zweckmässig, wenn die erste Zahnstange einen ersten Linear-Antrieb aufweist und die zweite Zahnstange einen zweiten Linear-Antrieb aufweist.

Bei einer alternativen Ausführung sind die erste Zahnstange und die zweite Zahnstange miteinander starr verbunden und weisen einen gemeinsamen Linear-Antrieb auf. Vorzugsweise stellen die beiden Zahnstangen und der Verbindungsbereich zwischen Ihnen ein einstückiges rahmenartiges Gebilde dar, das die Zahnräder der Dosierkolben der beiden Ebenen umgreift, wobei die Zähne der Zahnstangen an den beiden langen gegenüberliegenden Innenseiten des rahmenartigen Gebildes angeordnet sind und mit den in der ersten Ebene angeordneten Zahnrädern bzw. den in der zweiten Ebene angeordneten Zahnrädern kämmen.

Bei einer weiteren alternativen Ausführung verwendet man anstelle des die beiden Zahnstangen aufweisenden rahmenartigen Gebildes einen Endlos-Zahnriemen, der die Zahnräder der ersten Ebene und der zweiten Ebene umschlingt und zumindest an seiner den Zahnrädern zugewandten Innenseite mit einer Zahnung versehen ist.

Vorzugsweise verwendet man bei dieser alternativen Ausführung einen Endlos-Zahnriemen mit beidseitiger Zahnung, der die Zahnräder der ersten Ebene und der zweiten Ebene mäandrierend umschlingt, d.h. entlang der Ebene abwechselnd ein oberes und ein unteres Zahnrad umschlingt. Ein solcher Zahnriemen-Antrieb ist ruhig und kann durch unterschiedliche Temperaturänderungen in unterschiedlichen Bereichen der Giessmaschine bedingte Ausdehnungen ausgleichen.

Vorzugsweise ist zur drehfesten Verbindung eines Dosierkolbens mit einem Zahnrad ein Drehungs-Kopplungselement zwischen einem jeweiligen Dosierkolben und einem jeweiligen Zahnrad angeordnet. Dies ermöglicht eine leichte Montage und Demontage der Maschine, wobei insbesondere bei einem Problem an einer der Dosiereinheiten diese Dosiereinheit leicht "stillgelegt" werden kann, indem man das dieser Dosiereinheit zugeordnete Drehungs-Kopplungselement entfernt. Ausserdem können über ein derartiges Drehungs-Kopplungselement durch ein geringfügiges Spiel der Kopplung unterschiedliche Ausdehnungen zwischen dem relativ kalten Antriebsbereich der Giessmaschine, in welchem die Zahnräder und Zahnstangen angeordnet sind, und dem relativ warmen Dosierbereich der Giessmaschine, in welchem die in den Kolbenkammern gelagerten Dosierkolben angeordnet sind, ausgeglichen werden. Der Antriebsbereich ist z.B. als Antriebsbalken ausgebildet, in dem die für den Antrieb der Dosiereinheiten benötigten Elemente enthalten sind. Der Dosierbereich ist z.B. als Dosierbalken ausgebildet, in dem die Dosierkolben gelagert sind. Die gelagerten Dosierkolben können vorzugsweise eine Drehbewegung um ihre Längsachse sowie eine Linearbewegung entlang ihrer Längsachse durchführen.

Bei einer alternativen Ausführung sind die Dosierkolben jeweils einstückig mit einem jeweiligen Zahnrad ausgebildet. In diesem Fall werden die Betriebstemperaturen des Antriebsbereichs und des Dosierbereichs durch geeignete Massnahmen aneinander angeglichen. Ergänzend zu dieser Temperaturangleichung oder alternativ hierzu kann auch in diesem Fall ein Zahnriemen anstelle der Zahnstangen, wie weiter oben beschrieben, als Antriebselement verwendet werden.

Als Linear-Antrieb für die beiden Zahnstangen oder die beiden miteinander verbundenen Zahnstangen (Rahmen-Gebilde) werden zweckmässigerweise pneumatische Antriebe verwendet. Es können jedoch auch hydraulische Antriebe oder elektrische Servoantriebe verwendet werden. Vorzugsweise wird für den Antrieb der Drehbewegung des Dosierkolbens ein Pneumatikzylinder verwendet wird, der mit einer Zahnstange starr verbunden ist.

Das weiter oben beschriebene Drehungs-Kopplungselement besitzt vorzugsweise einen Mittelabschnitt sowie einen ersten Endabschnitt und einen zweiten Endabschnitt und hat zwischen dem ersten Endabschnitt und dem Mittelabschnitt sowie zwischen dem zweiten Endabschnitt und dem Mittelabschnitt jeweils eine Verengung. Im drehfest gekoppelten Zustand ist dabei der erste Endabschnitt in eine zu ihm komplementäre Aussparung an einem axialen Ende des Dosierkolbens eingefügt, und der zweite Endabschnitt ist in eine zu ihm komplementäre Aussparung an einem axialen Ende des Zahnrades eingefügt. Vorzugsweise ist dieses Kopplungselement durch eine Bewegung senkrecht zur Drehachse des Dosierkolbens bzw. senkrecht zur Drehachse des Zahnrades aus den komplementären Aussparungen entnehmbar. Dies ermöglicht eine besonders leichte Montage und Demontage der Giessmaschine sowie das Abkoppeln des Dosierkolbens einer Dosiereinheit von dem ihm zugeordneten Zahnrad des Antriebsbereichs.

Vorzugsweise ist zwischen den eingefügten Endabschnitten des Kopplungselements und den Aussparungen jeweils ein Spiel vorhanden, das einen Versatz zwischen der Drehachse des Dosierkolbens und der Drehachse des Zahnrades quer zu den Achsrichtungen ermöglicht. Über ein solches geringfügiges Spiel der Kopplung lassen sich besonders gut die unterschiedlichen Ausdehnungen zwischen dem relativ kalten Antriebsbereich der Giessmaschine und dem relativ warmen Dosierbereich der Giessmaschine ausgleichen.

Zweckmässigerweise weist jedes eingefügte Kopplungselement im drehfest gekoppelten Zustand eine Herausfall-Sicherung auf, die verhindert, dass das Kopplungselement in einer bestimmten Drehstellung der aus Dosierkolben, Kopplungselement und Zahnrad bestehenden Einheit aufgrund seiner Schwerkraft aus dieser Einheit herausfällt.

Die Auflagefläche der erfindungsgemässen Giessmaschine kann die Innenfläche einer Hohlform sein, in welche die Masse hineindosiert wird, um Verzehrgüter einer bestimmten Gestalt herzustellen.

Zweckmässigerweise ist zwischen dem Antriebsraum, der die Energiequellen für die diversen Antrieb der Giessmaschine enthält, und dem Produktraum, in dem die Verzehrgüter hergestellt werden, eine Trennwand vorgesehen. Sie dient einerseits zum Schutz des Antriebsraums vor Verunreinigungen durch die zu dem Verzehrgut verarbeiteten Massen und andererseits als Wärmeisolation zwischen dem Produktraum und dem Antriebsraum.

Zweckmässigerweise sind die Dosiereinheiten mit der jeweiligen Kolbenkammer und dem darin gelagerten Dosierkolben mit zueinander parallel ausgerichteten Längsachsen bzw. Drehachsen angeordnet. Vorzugsweise sind dann die Dosiereinheiten der ersten Ebene und die Dosiereinheiten der zweiten Ebene entlang der Richtung senkrecht zu den parallelen Längsachsen bzw. Drehachsen zueinander versetzt angeordnet. Dies ermöglicht eine besonders kompakte Bauform der erfindungsgemässen Giessmaschine.

Weitere Vorteile, Merkmale und Anwendungsmöglichkeiten der erfindungsgemässen Vorrichtung ergeben sich aus der nun folgenden Beschreibung einer nicht einschränkend aufzufassenden Ausführung anhand der Zeichnung, wobei
- Fig. 1: eine Draufsicht auf eine geöffnete erfindungsgemässe Vorrichtung ist;
- Fig. 2: eine Schnittansicht entlang der Schnittebene E1-E1 oder entlang der Schnittebene E2-E2 der Fig. 1 ist, die eine erste Ausführung der erfindungsgemässen Vorrichtung zeigt;
- Fig. 3: eine Schnittansicht entlang der Schnittebene E1-E1 oder entlang der Schnittebene E2-E2 der Fig. 1 ist, die eine zweite Ausführung der erfindungsgemässen Vorrichtung zeigt; und
- Fig. 4: eine Perspektivansicht eines Elements der erfindungsgemässen Vorrichtung ist.

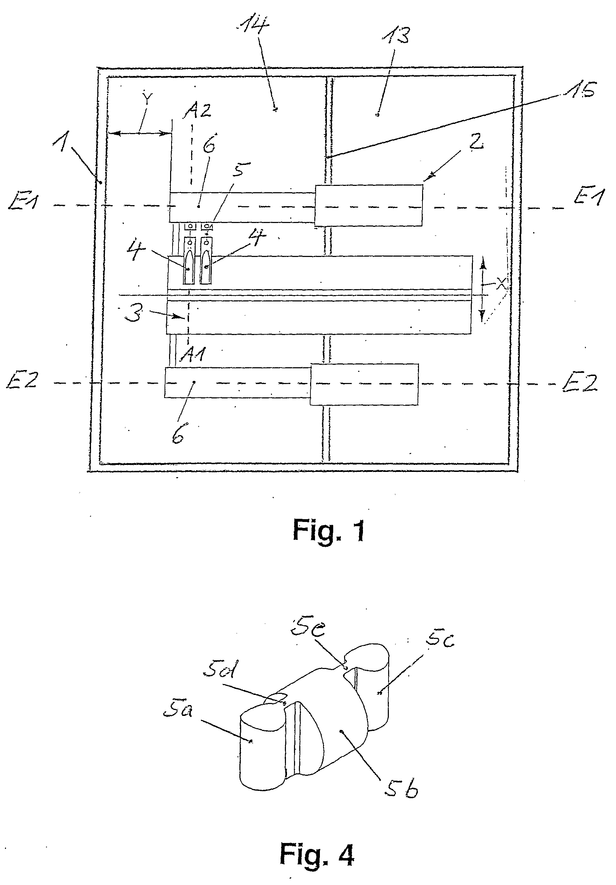

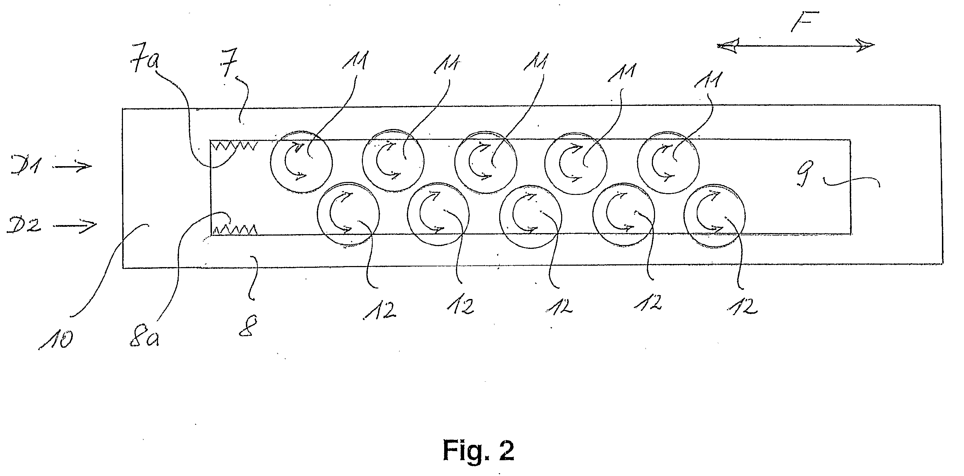

In Fig. 1 ist der Innenraum einer erfindungsgemässen Vorrichtung bzw. Giessmaschine in einer Draufsicht schematisch gezeigt. In einem Maschinengestell 1 ist jeweils ein Antriebsbalken 2 beiderseits eines Dosierbalkens 3 angeordnet. Der Antriebsbalken 2 und der Dosierbalken 3 sind durch (nicht gezeigte) Antriebe in einer horizontalen Ebene entlang der X-Richtung und entlang der Y-Richtung translatorisch bewegbar. In dem Dosierbalken 3 sind mehrere zueinander parallel angeordnete Dosierkolben 4 gelagert, die jeweils über ein Kopplungsstück 5 mit einem von mehreren Zahnrädern 11 verbunden sind, die in dem Antriebsbalken 2 gelagert und in diesem angetrieben werden. Der Dosierbalken 3 enthält somit eine Vielzahl von Dosiereinheiten D, die jeweils durch einen Dosierkolben 4, ein Kopplungsstück 5 und ein Zahnrad 11 gebildet sind. Vorzugsweise sind die Dosiereinheiten D in einer ersten Ebene bzw. einem ersten Stock sowie in einer zweiten Ebene bzw. einem zweiten Stock angeordnet, wobei die Dosiereinheiten D der oberen Ebene und die Dosiereinheiten der unteren Ebene jeweils durch ein gesondertes Antriebselement 7 bzw. 8 angetrieben werden (siehe Fig. 2).

In Fig. 1 ist ausserdem eine Trennwand 15 gezeigt, die den Antriebsraum 13 von dem Produktraum 14 der Vorrichtung trennt. Sie sorgt für einen Schutz des Antriebsraums 13 vor Verunreinigungen durch die zu dem Verzehrgut verarbeiteten Massen und bildet eine Wärmeisolation zwischen dem Produktraum 14 und dem Antriebsraum 13.

In Fig. 2 ist eine erste Ausführung der Antriebselemente der Dosiereinheiten D schematisch dargestellt. Eine erste bzw. obere Zahnstange 7 kämmt mit den Zahnrädern 11 der in der ersten bzw. oberen Ebene angeordneten Dosiereinheiten D1, während eine zweite bzw. untere Zahnstange 8 mit den Zahnrädern 12 der in der zweiten bzw. unteren Ebene angeordneten Dosiereinheiten D2 kämmt. Die obere Zahnstange 7 und die untere Zahnstange 8 sind über einen ersten Verbindungsbereich 9 und einen zweiten Verbindungsbereich 10 jeweils am Ende der beiden Zahnstangen 7, 8 miteinander starr verbunden und werden durch (nicht dargestellte) Antriebselemente in den durch den Doppelpfeil F dargestellten Richtungen hin und her bewegt. Die Zahnungen 7a und 8a der Zahnstangen 7 bzw. 8 sind nur in einem Teilbereich der Zahnstange angedeutet. Die Zähne 11 a und 12a der Zahnräder 11 bzw. 12 sind nur bei dem ersten Zahnrad der oberen bzw. der unteren Ebene angedeutet. Die Zahnstangen 7 und 8 bilden zusammen mit den Verbindungsbereichen 9 und 10 einen die beiden Ebenen der Dosiereinheiten umgreifenden Antriebsrahmen, der an seinen Innenseiten die mit den Zahnrädern 11 und 12 der beiden Ebenen kämmenden Zahnungen 7a und 8a aufweist.

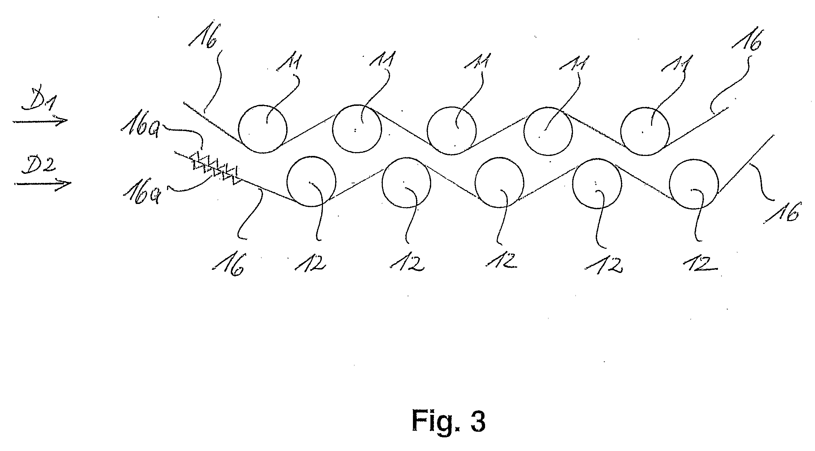

In Fig. 3 ist eine zweite Ausführung der Antriebselemente der Dosiereinheiten D schematisch dargestellt. Die Zahnräder 11 und 12 der oberen bzw. der unteren Ebene kämmen mit einem beidseitig gezahnten Zahnriemen 16, der mäandrierend bzw. zickzackartig um die Zahnräder 11 und 12 herum geführt ist und von einem (nicht dargestellten) Antriebselement angetrieben wird, das den Zahnriemen 16 hin und her bewegt. Die beidseitige Zahnung 16a ist nur in einem Teilbereich des Zahnriemens angedeutet.

Die Drehkolben 4 besitzen eine Aussparung. Wenn diese Dosierkolben 4 mittels des Zahnstangenantriebs 11, 12 oder mittels des Zahnriemenantriebs 16 um ihre Achse A2 herum hin und her drehangetrieben werden, führen sie einen Teil eines Dosierzyklus durch. Ein weiter Teil dieses Dosierzyklus ist eine axiale Hin- und Herbewegung der Dosierkolben 4 entlang ihrer Achse A2 durch (nicht gezeigte) weitere Antriebsmittel.

In Fig. 4 ist ein Kopplungsstück 5 gezeigt, das zur drehfesten Verbindung zwischen einem Drehkolben 4 und einem Zahnrad 11, 12 dient. Das Kopplungsstück 5 besitz einen ersten Endabschnitt 5a, einen Mittelabschnitt 5b, einen zweiten Endabschnitt 5c sowie eine erste Verengung 5d, die zwischen dem ersten Endabschnitt 5a und dem Mittelabschnitt 5b ausgebildet ist, und eine zweite Verengung 5d, die zwischen dem zweiten Endabschnitt 5c und dem Mittelabschnitt 5b ausgebildet ist.

Im drehfest gekoppelten Zustand ist der erste Endabschnitt 5a in eine zu ihm komplementäre Aussparung an einem axialen Ende des Dosierkolbens 4 eingefügt, während der zweite Endabschnitt 5c in eine zu ihm komplementäre Aussparung an einem axialen Ende des Zahnrades 11, 12 eingefügt ist. Das Kopplungselement kann durch eine Bewegung senkrecht zur Drehachse A1 des Dosierkolbens 4 bzw. senkrecht zur Drehachse A1 des Zahnrades 11, 12 aus den komplementären Aussparungen entnommen werden. Zwischen den eingefügten Endabschnitten 5a, 5c des Kopplungselements 5 und den Aussparungen in den Drehkolben 4 und den Zahnrädern 11, 12 ist jeweils ein Spiel vorhanden. Dies ermöglicht einen Versatz zwischen der Drehachse A1 eines Dosierkolbens 4 und der Drehachse A2 eines Zahnrades 11, 12 quer zu den Achsrichtungen der Achsen A1 und A2. Das Kopplungselement 5 ist als kardanisches Gelenkstück ausgebildet, das einen Versatz der Achsen A1 und A2 quer zu den Achsrichtungen ohne Versatz der Achsen A1 und A2 entlang der Achsrichtung ermöglicht. Vorzugsweise ist die durch das Kopplungsstück 5 vermittelte Kopplung zwischen einem Drehkolben 4 und einem Zahnrad nicht nur frei von axialem Spiel, sondern auch frei von Drehspiel. Dadurch wird die Dosiergenauigkeit der Dosiereinheiten D, die auf dem Drehhub und dem Verschiebungshub eines Dosierkolbens 4 beruht, durch thermisch bedingte Versätze zwischen den Achsen A1 und A2 nicht beeinträchtigt.

Jedes der eingefügten Kopplungselemente 5 ist im eingebauten Zustand der drehfesten Kopplung von Dosierkolben 4 und Zahnrad 11, 12 durch einen Herausfall-Schutz gesichert. Ein solcher Herausfall-Schutz wird durch elastische Aufsätze gebildet, die gegen das Kopplungsstück 5 drücken und z.B. mittels einer auf das Dosierkolben-Ende aufsteckbaren Einrastverbindung oder Clipsverbindung an der Dosiereinheit D abnehmbar befestigt sind.

### Bezugszeichen

- 1: Maschinengestell
- 2: Antriebsbereich (Antriebsbalken)
- 3: Dosierbereich (Dosierbalken)
- 4: Dosierkolben
- 5: Kopplungsstück
- 5a: Endabschnitt
- 5b: Mittelabschnitt
- 5c: Endabschnitt
- 5d: Verengung
- 5e: Verengung
- 6: Antriebsbalken
- 7: erste Zahnstange
- 7a: Zahnung
- 8: zweite Zahnstange
- 8a: Zahnung
- 9: erster Verbindungsbereich
- 10: zweiter Verbindungsbereich
- 11: Zahnrad der ersten Ebene
- 12: Zahnrad der zweiten Ebene
- 13: Antriebsraum
- 14: Produktraum
- 15: Trennwand
- 16: Zahnriemen
- 16a: Zahnung
- D1: Dosiereinheit (4, 5,11) der ersten Ebene
- D2: Dosiereinheit (4, 5,12) der zweiten Ebene
- F: Bewegungsrichtungen der Zahnstange
- A1: Drehkolben-Achse
- A2: Zahnrad-Achse

## Patentansprüche

1. Vorrichtung zur Verarbeitung eines Verzehrgutes in Form einer viskosen bis pastösen Masse, insbesondere eines Verzehrgutes auf Fettmasse-Basis wie Schokolade oder eines Verzehrgutes auf Wasser-Basis wie Eiskrem, mit Dosiereinheiten zum dosierten Zuführen eines bestimmten Volumens der Masse auf eine Auflagefläche, wobei die Dosiereinheiten (D) jeweils einen in einer Kolbenkammer gelagerten Dosierkolben (4) aufweisen, dessen Dosierbewegung mindestens eine Drehbewegung des Dosierkolbens (4) um seine Kolbenachse (A1) aufweist, und wobei eine erste Vielzahl von Dosiereinheiten (D1) in einer ersten Ebene angeordnet sind und eine zweite Vielzahl von Dosiereinheiten (D2) in einer zweiten Ebene angeordnet sind, **dadurch gekennzeichnet, dass** die Dosierkolben (4) der in der ersten Ebene angeordneten Dosiereinheiten (D1) über ein erstes Antriebselement (7; 16) drehangetrieben sind und die Dosierkolben (4) der in der zweiten Ebene angeordneten Dosiereinheiten (D2) über ein zweites Antriebselement (8; 16) drehangetrieben sind.

2. Vorrichtung nach Anspruch 1, **dadurch gekennzeichnet, dass** die Dosierkolben (4) jeweils drehfest mit einem Zahnrad (11, 12) verbunden sind, dessen Drehachse (A2) kollinear mit der Drehachse (A1) des jeweiligen Drehkolbens (4) ist, wobei das erste Antriebselement eine erste Zahnstange (7) ist, deren Zahnung (7a) mit den Zahnrädern (11) der in der ersten Ebene angeordneten Dosierkolben (4) kämmt, und wobei das zweite Antriebselement eine zweite Zahnstange (8) ist, deren Zahnung (8a) mit den Zahnrädern (12) der in der zweiten Ebene angeordneten Dosierkolben (4) kämmt.

3. Vorrichtung nach Anspruch 2, **dadurch gekennzeichnet, dass** die erste Zahnstange (7) und die zweite Zahnstange (8) miteinander über mindestens einen Verbindungsbereich (9, 10) starr verbunden sind und einen gemeinsamen Linear-Antrieb aufweisen.

4. Vorrichtung nach Anspruch 2, **dadurch gekennzeichnet, dass** die erste Zahnstange (7) einen ersten Linear-Antrieb aufweist und die zweite Zahnstange (8) einen zweiten Linear-Antrieb aufweist.

5. Vorrichtung nach einem der Ansprüche 2 bis 4, **dadurch gekennzeichnet, dass** zur drehfesten Verbindung eines Dosierkolbens (4) mit einem Zahnrad (11, 12) ein Drehungs-Kopplungselement (5) zwischen einem jeweiligen Dosierkolben (4) und einem jeweiligen Zahnrad (11, 12) angeordnet ist.

6. Vorrichtung nach einem der Ansprüche 2 bis 4, **dadurch gekennzeichnet, dass** die Dosierkolben (4) jeweils einstückig mit einem jeweiligen Zahnrad (11, 12) ausgebildet sind.

7. Vorrichtung nach einem der Ansprüche 3 oder 4, **dadurch gekennzeichnet, dass** der Linear-Antrieb bzw. die Linear-Antriebe der Zahnstangen (7, 8) pneumatische Antriebe sind.

8. Vorrichtung nach Anspruch 7, **dadurch gekennzeichnet, dass** für den Antrieb der Drehbewegung des Dosierkolbens (4) ein Pneumatikzylinder verwendet wird, der mit einer Zahnstange (7, 8) starr verbunden ist.

9. Vorrichtung nach Anspruch 5, **dadurch gekennzeichnet, dass** das Drehungs-Kopplungselement (5) einen Mittelabschnitt (5b) sowie einen ersten Endabschnitt (5a) und einen zweiten Endabschnitt (5c) aufweist und zwischen dem ersten Endabschnitt und dem Mittelabschnitt sowie zwischen dem zweiten Endabschnitt und dem Mittelabschnitt jeweils eine Verengung (5d bzw. 5e) aufweist, wobei im drehfest gekoppelten Zustand der erste Endabschnitt (5a) in eine zu ihm komplementäre Aussparung an einem axialen Ende des Dosierkolbens (4) eingefügt ist und der zweite Endabschnitt (5c) in eine zu ihm komplementäre Aussparung an einem axialen Ende des Zahnrades (11, 12) eingefügt ist.

10. Vorrichtung nach Anspruch 9, **dadurch gekennzeichnet, dass** das Kopplungselement (5) durch eine Bewegung senkrecht zur Drehachse (A1) des Dosierkolbens (4) bzw. senkrecht zur Drehachse (A2) des Zahnrades (11, 12) aus den komplementären Aussparungen entnehmbar ist.

11. Vorrichtung nach Anspruch 9 oder 10, **dadurch gekennzeichnet, dass** zwischen den eingefügten Endabschnitten des Kopplungselements und den Aussparungen jeweils ein Spiel vorhanden ist, das einen Versatz zwischen der Drehachse (A1) des Dosierkolbens (4) und der Drehachse (A2) des Zahnrades (11, 12) quer zu den Achsrichtungen ermöglicht.

12. Vorrichtung nach Anspruch 10 oder 11, **dadurch gekennzeichnet, dass** jedes eingefügte Kopplungselement (5) im drehfest gekoppelten Zustand eine Herausfall-Sicherung aufweist.

13. Vorrichtung nach einem der Ansprüche 1 bis 12, **dadurch gekennzeichnet, dass** ihre Auflagefläche die Innenfläche einer Hohlform ist.

14. Vorrichtung nach einem der vorhergehenden Ansprüche, **dadurch gekennzeichnet, dass** bei ihr zwischen dem Antriebsraum (13) und dem Produktraum (14) eine Trennwand (15) vorgesehen ist.

15. Vorrichtung nach einem der Ansprüche 1 bis 14, **dadurch gekennzeichnet, dass** die Dosiereinheiten (D1, D2) mit der jeweiligen Kolbenkammer und dem darin gelagerten Dosierkolben (4) mit zueinander parallel ausgerichteten Längsachsen bzw. Drehachsen (A1) angeordnet sind.

16. Vorrichtung nach Anspruch 15, **dadurch gekennzeichnet, dass** die Dosiereinheiten (D1) der ersten Ebene und die Dosiereinheiten (D2) der zweiten Ebene entlang der Richtung senkrecht zu den parallelen Längsachsen bzw. Drehachsen (A1) zueinander versetzt angeordnet sind.

## Claims

1. Apparatus for processing an edible product in the form of a viscous to pasty substance, in particular a fat-based edible product such as chocolate or a water-based edible product such as ice cream, having metering units for the metered feeding of a certain volume of substance onto a bearing surface, wherein the metering units (D) each have a metering piston (4), which is mounted in a piston chamber and the metering movement of which involves at least one rotary movement of the metering piston (4) about its piston axis (A1), and wherein a first multiplicity of metering units (D1) are arranged in a first plane and a second multiplicity of metering units (D2) are arranged in a second plane, **characterized in that** the metering pistons (4) of the metering unit (D1) arranged in the first plane are driven in rotation via a first drive element (7; 16) and the metering pistons (4) of the metering unit (D2) arranged in the second plane are driven in rotation via a second drive element (8; 16).

2. Apparatus according to Claim 1, **characterized in that** the metering pistons (4) are each connected in a rotationally fixed manner to a gearwheel (11, 12), the axis of rotation (A2) of which is collinear with the axis of rotation (A1) of the respective rotary piston (4), wherein the first drive element is a first rack (7), the toothing formation (7a) of which meshes with the gearwheels (11) of the metering pistons (4) arranged in the first plane, and wherein the second drive element is a second rack (8), the toothing formation (8a) of which meshes with the gearwheels (12) of the metering pistons (4) arranged in the second plane.

3. Apparatus according to Claim 2, **characterized in that** the first rack (7) and the second rack (8) are connected rigidly to one another via at least one connecting region (9, 10) and have a common linear drive.

4. Apparatus according to Claim 2, **characterized in that** the first rack (7) has a first linear drive and the second rack (8) has a second linear drive.

5. Apparatus according to one of Claims 2 to 4, **characterized in that**, for rotationally fixed connection of the metering piston (4) to a gearwheel (11, 12), a rotational coupling element (5) is arranged between a respective metering piston (4) and a respective gearwheel (11, 12).

6. Apparatus according to one of Claims 2 to 4, **characterized in that** the metering pistons (4) are each formed in one piece with a respective gearwheel (11, 12).

7. Apparatus according to either of Claims 3 or 4, **characterized in that** the linear drive or the linear drives of the racks (7, 8) is/are pneumatic drives.

8. Apparatus according to Claim 7, **characterized in that**, for driving the rotary movement of the metering piston (4), use is made of a pneumatic cylinder which is connected rigidly to a rack (7, 8).

9. Apparatus according to Claim 5, **characterized in that** the rotational coupling element (5) has a central portion (5b) and also a first end portion (5a) and a second end portion (5c) and has a respective narrowing (5d, 5e) between the first end portion and the central portion and between the second end portion and the central portion, wherein, in the state in which rotationally fixed coupling has taken place, the first end portion (5a) has been inserted into a complementary aperture at one axial end of the metering piston (4) and the second end portion (5c) has been inserted into a complementary aperture at one axial end of the gearwheel (11, 12).

10. Apparatus according to Claim 9, **characterized in that** the coupling element (5) can be removed from the complementary apertures by way of a movement perpendicular to the axis of rotation (A1) of the metering piston (4) and/or perpendicular to the axis of rotation (A2) of the gearwheel (11, 12).

11. Apparatus according to Claim 9 or 10, **characterized in that** there is play present in each case between the inserted end portions of the coupling element and the apertures, and said play allows offsetting between the axis of rotation (A1) of the metering piston (4) and the axis of rotation (A2) of the gearwheel (11, 12) in a direction transverse to the axis directions.

12. Apparatus according to Claim 10 or 11, **characterized in that**, in the state in which rotationally fixed coupling has taken place, each inserted coupling element (5) has a dropoutprevention means.

13. Apparatus according to one of Claims 1 to 12, **characterized in that** the bearing surface thereof is the inner surface of a hollow mould.

14. Apparatus according to one of the preceding claims, **characterized in that** it has a partition wall (15) provided between the drive space (13) and the product space (14).

15. Apparatus according to one of Claims 1 to 14, **characterized in that** the metering units (D1, D2), with the respective piston chamber and the metering piston (4) mounted therein, are arranged with longitudinal axes or axes of rotation (A1) oriented parallel to one another.

16. Apparatus according to Claim 15, **characterized in that** the metering units (D1) of the first plane and the metering units (D2) of the second plane are offset in relation to one another along the direction perpendicular to the parallel longitudinal axes or axes of rotation (A1).

## Revendications

1. Ensemble de traitement d'un produit de consommation qui présente la forme d'une pâte visqueuse à pâteuse, en particulier d'un produit de consommation à base de pâte grasse, par exemple du chocolat, ou d'un produit de consommation à base d'eau, par exemple de la crème glacée, à l'aide d'unités de dosage permettant d'amener de manière dosée un volume défini de la pâte sur une surface de pose,
les unités de dosage (D) présentant chacune un piston doseur (4) monté dans une chambre de piston et dont le déplacement de dosage présente au moins un déplacement de rotation du piston doseur (4) autour de son axe (A1) de piston,
plusieurs premières unités de dosage (D1) étant disposées dans un premier plan et plusieurs deuxièmes unités de dosage (D2) étant disposées dans un deuxième plan,
**caractérisé en ce que**
les pistons doseurs (4) des unités de dosage (D1) disposées dans le premier plan sont entraînés en rotation par un premier élément d'entraînement (7; 16) et les pistons doseurs (4) des unités de dosage (D2) disposées dans le deuxième plan sont entraînés en rotation par un deuxième élément d'entraînement (8; 16).

2. Ensemble selon la revendication 1, **caractérisé en ce que** les pistons doseurs (4) sont tous reliés à rotation solidaire à une roue dentée (11, 12) dont l'axe de rotation (A2) est colinéaire par rapport à l'axe de rotation (A1) de chaque piston doseur (4), le premier élément d'entraînement étant une première crémaillère (7) dont les dents (7a) engrènent les roues dentées (11) des pistons doseurs (4) disposés dans le premier plan et le deuxième élément d'entraînement étant une deuxième crémaillère (8) dont les dents (8a) engrènent les roues dentées (12) des pistons doseurs (4) disposés dans le deuxième plan.

3. Ensemble selon la revendication 2, **caractérisé en ce que** la première crémaillère (7) et la deuxième crémaillère (8) sont reliées rigidement l'une à l'autre par au moins une partie de liaison (9, 10) et présentent un entraînement linéaire commun.

4. Ensemble selon la revendication 2, **caractérisé en ce que** la première crémaillère (7) présente un premier entraînement linéaire et la deuxième crémaillère (8) un deuxième entraînement linéaire.

5. Ensemble selon l'une des revendications 2 à 4, **caractérisé en ce qu'**un élément (5) d'accouplement en rotation est disposé entre chaque piston doseur (4) et une roue dentée respective (11, 12) pour relier à rotation solidaire un piston doseur (4) à une roue dentée (11, 12).

6. Ensemble selon l'une des revendications 2 à 4, **caractérisé en ce que** les pistons doseurs (4) sont tous réalisés d'une seule pièce avec une roue dentée (11, 12) respective.

7. Ensemble selon l'une des revendications 3 ou 4, **caractérisé en ce que** l'entraînement linéaire ou les entraînements linéaires des crémaillères (7, 8) sont des entraînements pneumatiques.

8. Ensemble selon la revendication 7, **caractérisé en ce qu'**un vérin pneumatique raccordé rigidement à une crémaillère (7, 8) est utilisé pour l'entraînement du déplacement de rotation du piston doseur (4).

9. Ensemble selon la revendication 5, **caractérisé en ce que** l'élément (5) d'accouplement en rotation présente une partie centrale (5b) ainsi qu'une première partie d'extrémité (5a) et qu'une deuxième partie d'extrémité (5c), un rétrécissement (5d ou 5e) étant prévu entre la première partie d'extrémité et la partie centrale ainsi qu'entre la deuxième partie d'extrémité et la partie centrale, tandis qu'en situation d'accouplement à rotation solidaire, la première partie d'extrémité (5a) étant insérée dans une découpe complémentaire d'une extrémité axiale du piston doseur (4) et la deuxième partie d'extrémité (5c) étant insérée dans une découpe complémentaire prévue sur une extrémité axiale de la roue dentée (11, 12).

10. Ensemble selon la revendication 9, **caractérisé en ce que** l'élément d'accouplement (5) peut être retiré des découpes complémentaires par un déplacement perpendiculaire à l'axe de rotation (A1) du piston doseur (4) ou perpendiculaire à l'axe de rotation (A2) de la roue dentée (11, 12).

11. Ensemble selon les revendications 9 ou 10, **caractérisé en ce qu'**un jeu qui permet un décalage entre l'axe de rotation (A1) du piston doseur (4) et l'axe de rotation (A2) de la roue dentée (11, 12) transversalement par rapport à la direction des axes est prévu entre les parties d'extrémité insérées de l'élément d'accouplement et des découpes.

12. Ensemble selon les revendications 10 ou 11, **caractérisé en ce que** chaque élément d'accouplement (5) inséré présente une protection contre les fuites lorsqu'il est en situation d'accouplement à rotation solidaire.

13. Ensemble selon l'une des revendications 1 à 12, **caractérisé en ce que** sa surface de pose est la surface intérieure d'un moule creux.

14. Ensemble selon l'une des revendications précédentes, **caractérisé en ce qu'**une paroi de séparation (15) est prévue entre l'espace d'entraînement (13) et l'espace à produit (14).

15. Ensemble selon l'une des revendications 1 à 14, **caractérisé en ce que** les unités de dosage (D1, D2) et leurs chambres à pistons dans lesquelles sont montés les pistons doseurs (4) sont disposées avec leurs axes longitudinaux ou leurs axes de rotation (A1) orientés parallèlement les uns aux autres.

16. Ensemble selon la revendication 15, **caractérisé en ce que** les unités de dosage (D1) du premier plan et les unités de dosage (D2) du deuxième plan sont disposées à décalage mutuel dans une direction perpendiculaire aux axes longitudinaux ou axes de rotation (A1) parallèles.
